# EUROPEAN PATENT APPLICATION

(11) **EP 4 589 686 A1**
(43) Date of publication of application: **23.07.2025**
(21) Application number: 25151836.1
(22) Date of filing: 14.01.2025
(51) Int. Cl.: H01M 4/36, H01M 4/505, H01M 4/525

(54) **CATHODE ACTIVE MATERIAL, CATHODE FOR LITHIUM SECONDARY BATTERY, AND LITHIUM SECONDARY BATTERY**

(30) Priority: 17.01.2024 KR 20240007269
(71) Applicant: SK On Co., Ltd., Seoul 03161 (KR)
(72) Inventor: PARK, Young Uk, 34124 Daejeon (KR); KANG, Hyun Sung, 34124 Daejeon (KR); BEAK, Min Cheol, 34124 Daejeon (KR); KANG, Min Suk, 34124 Daejeon (KR); KIM, Seung Hyun, 34124 Daejeon (KR); DO, Ji Yae, 34124 Daejeon (KR)
(74) Representative: Prüfer & Partner mbB Patentanwälte · Rechtsanwälte

(57) **Abstract**

A cathode active material includes a core containing a first active material, a lithium-rich oxide, and a shell disposed on a surface of the core and containing a second active material having an olivine structure. Weight % of the first active material is greater than or equal to weight % of the second active material based on a total weight of the cathode active material. A cathode for a lithium secondary battery having excellent lifespan performance may be provided.

## Description

### BACKGROUND

### 1. FIELD

The disclosure and implementations disclosed in this patent document generally relate to a cathode active material, a cathode for a lithium secondary battery, and a lithium secondary battery.

### 2. DESCRIPTION OF THE RELATED ART

Recently, research into electric vehicles (EVs) that may replace fossil fuel vehicles such as gasoline and diesel powered vehicles, which are one of the main causes of air pollution, is being conducted, and lithium secondary batteries with high discharge voltage and output stability are mainly used as the power source for such electric vehicles (EVs).

In order to improve the performance of lithium secondary batteries, it is necessary to develop technologies that may improve the energy density, lifespan performance and the like of the cathode for lithium secondary batteries.

### SUMMARY

The present disclosure can be implemented in some embodiments to provide a cathode for a lithium secondary battery in which the lifespan performance may be improved.

The present disclosure can be implemented in some embodiments to provide a cathode for a secondary battery having excellent thermal stability.

The present disclosure can be implemented in some embodiments to provide a cathode for a lithium secondary battery in which energy density may be improved.

A cathode active material, a cathode for a lithium secondary battery, and a lithium secondary battery in the present disclosure may be widely applied to devices within green technology fields, such as electric vehicles and battery charging stations. In addition, the cathode for a lithium secondary battery and the lithium secondary battery in the present disclosure may be used in eco-friendly electric vehicles, hybrid vehicles, and the like to ameliorate the effects of climate change by suppressing air pollution and greenhouse gas emissions.

In some embodiments of the present disclosure, a cathode active material includes a core containing a first active material, a lithium-rich oxide; and a shell disposed on a surface of the core and containing a second active material having an olivine structure. Weight % of the first active material is greater than or equal to weight % of the second active material based on a total weight of the cathode active material.

The first active material may be represented by chemical formula 1: Liₐ[MₓNi_{y}Mn_{z}]O_{b}, where M is at least one element selected from the group consisting of Co, Mg, Ti, Al, Fe, Ru, Zr, W, Sn, Nb, Mo, Cu, Zn, Cr, Ga, V and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

The second active material may be represented by chemical formula 2: LiMePO₄, where Me is at least one element selected from the group consisting of Co, Ni, Fe, and Mn.

A weight ratio of the first active material and the second active material based on the total weight of the cathode active material may be 60:40 to 95:5.

A BET specific surface area of the first active material may be 0.9 m²/g to 2.0 m²/g.

An average particle diameter D50 of the first active material may be equal to or greater than an average particle diameter D50 of the second active material.

The average particle diameter D50 of the first active material may be 5 µm to 12 µm.

The average particle diameter D50 of the second active material may be 0.3 µm to 5 µm.

In some embodiments of the present disclosure, a cathode for a lithium secondary battery includes a cathode active material according to any one of the embodiments described above.

In some embodiments of the present disclosure, a method of manufacturing a cathode for a lithium secondary battery includes operations of: manufacturing a cathode slurry including a first active material which is a lithium-rich oxide and a second active material having an olivine structure; and forming a cathode mixture layer on at least one surface of a cathode current collector with the cathode slurry. The cathode mixture layer includes the cathode active material according to any one of the above-described embodiments.

The first active material may be represented by the chemical formula 1.

In some embodiments, the second active material may be represented by the chemical formula 2.

In some embodiments, the cathode slurry may be manufactured by adding the first active material to a pre-dispersed solution of the second active material.

In some embodiments, a solid content of the pre-dispersed solution may be 50 wt% to 70 wt%.

In some embodiments of the present disclosure, a lithium secondary battery includes the cathode for a lithium secondary battery according to any one of the above-described embodiments.

### BRIEF DESCRIPTION OF DRAWINGS

Certain aspects, features, and advantages of the present disclosure are illustrated by the following detailed description with reference to the accompanying drawings.
FIG. 1 is a cross-sectional view conceptually illustrating the form of a cathode active material according to an embodiment.
FIGS. 2A and 2B are drawings illustrating Scanning Electron Microscopy (SEM) and Energy Dispersive Spectroscopy (EDS) analysis images of a cross-section of a cathode active material according to Example 1.
FIGS. 3A and 3B are drawings illustrating Scanning Electron Microscopy (SEM) and Energy Dispersive Spectroscopy (EDS) analysis images of a cross-section of a cathode active material according to Example 5.

### DETAILED DESCRIPTION

Features of the present disclosure disclosed in this patent document are described by example embodiments with reference to the accompanying drawings.

Hereinafter, the technology disclosed in this specification and its implementation examples will be described in detail with reference to the attached drawings. However, the embodiment of the technology may be modified in various other forms, and the scope thereof is not limited to the implementation examples described below. In addition, the technology disclosed in this specification may be applied not only by being limited to the configurations of the implementation examples described below, but also may be configured by selectively combining all or some of the implementation examples so that various modifications may be made.

In this specification, 'lithium-rich oxide' may mean an oxide having a lithium-rich composition, such as a lithium-rich layered oxide (LLO), an over-lithiated oxide (OLO), or a lithium-manganese-rich (LMR) oxide. In detail, the `lithium-rich oxide' may mean an oxide having a lithium-rich composition in which the lithium content is higher than the transition metal content and exhibits a high capacity under high-voltage conditions.

As the demand for lithium secondary batteries increases, a technology capable of manufacturing high-capacity lithium secondary batteries with excellent life characteristics is required. According to an embodiment, lithium-rich oxide particles with high discharge capacity may be applied as a cathode active material to improve the capacity of the cathode. The lithium-rich oxide particles may improve the capacity of the cathode due to the oxidation/reduction reaction of oxygen during the charging process of the battery, and may be operated at a higher upper limit voltage than the existing nickel-cobalt-manganese (NCM)-based active material, thereby improving the energy density of the cathode.

However, when the lithium-rich oxide particles are applied as a cathode active material, oxygen in the lattice of the surface of the active material may be desorbed and an irreversible phase transition may occur when continuous battery charge/discharge cycles are repeated.

Accordingly, when the lithium-rich oxide particles are applied as a cathode active material, the amount of gas generated inside the secondary battery may increase, and the life characteristics of the battery may deteriorate, and these problems may become more severe as the operating temperature and upper limit voltage of the battery increase.

According to another embodiment, the life characteristics of the cathode may be improved by applying lithium metal oxide particles having an olivine structure with excellent structural stability as a cathode active material. Since the lithium metal oxide particles having an olivine structure have excellent thermal stability, when they are applied as a cathode active material, the degree of material deterioration may be relatively small even when the battery undergoes continuous charge/discharge cycles in a high-temperature environment. In addition, when the lithium metal oxide particles having an olivine structure are applied as a cathode active material, since the electrochemical reaction of the active material is usually terminated at a driving voltage of 3.2 to 3.4 V, less side reactions of the active material may occur at a high voltage of 4.5 V or higher.

However, since the lithium metal oxide particles of the olivine structure have low capacity, it may be difficult to improve the energy density of the battery when applied as a cathode active material.

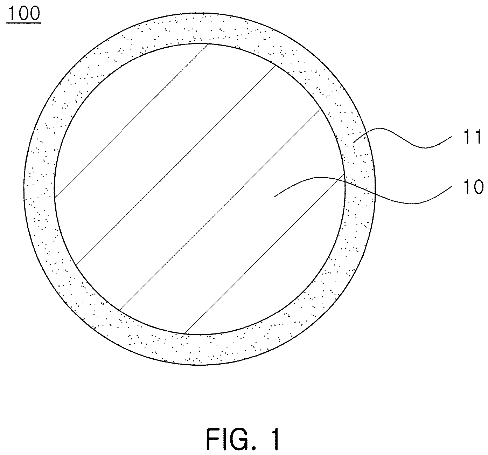

According to an embodiment, the above-described problems may be alleviated to provide a high-capacity lithium secondary battery cathode having excellent thermal stability, life characteristics, and the like. Hereinafter, embodiments will be described in detail with reference to FIGS. 1 to 3B.

FIG. 1 is a cross-sectional view conceptually illustrating the shape of a cathode active material according to an embodiment.

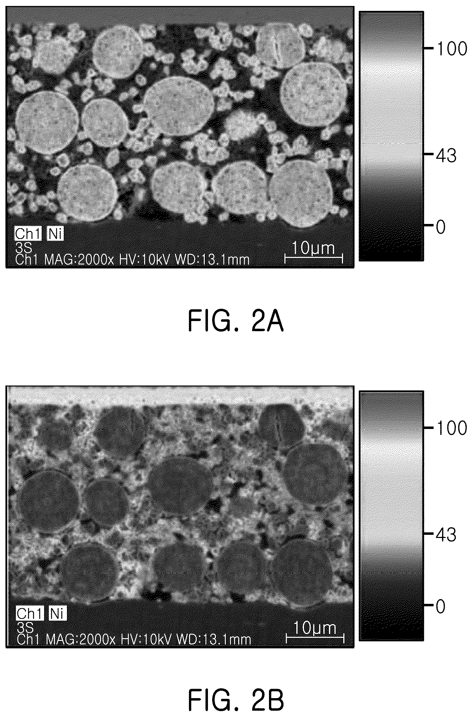

FIGS. 2A and 2B are drawings illustrating Scanning Electron Microscopy (SEM) and Energy Dispersive Spectroscopy (EDS) analysis images of a cross-section of a cathode active material according to Example 1.

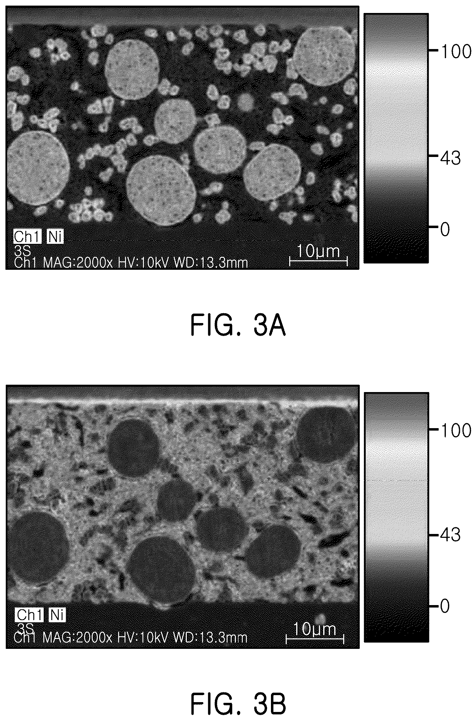

FIGS. 3A and 3B are drawings illustrating Scanning Electron Microscopy (SEM) and EDS (Energy Dispersive Spectroscopy) analysis images of a cross-section of a cathode active material according to Example 5.

### Cathode Active Material

A cathode active material 100 according to an embodiment includes a core 10 containing a first active material which is a lithium-rich oxide; and a shell 11 disposed on the surface of the core and containing a second active material having an olivine structure. The weight % of the first active material is equal to or greater than the weight % of the second active material based on the total weight of the cathode active material 100.

In some embodiments, the first active material may be represented by chemical formula 1.

[Chemical Formula 1] Liₐ[MₓNi_{y}Mn_{z}]O_{b}

In chemical formula 1, M is at least one element selected from the group consisting of Co, Mg, Ti, Al, Fe, Ru, Zr, W, Sn, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

In some embodiments, the second active material may be represented by chemical formula 2.

[Chemical Formula 2] LiMePO₄

In chemical formula 2, Me is at least one element selected from the group consisting of Co, Ni, Fe, and Mn.

The first active material represented by the chemical formula 1 is a lithium-rich oxide particle having a high discharge capacity, and may be a composite of 1) an oxide of a lithium-rich phase, such as Li₂MnO₃, and 2) an oxide of a layered structure, such as an NCM-based cathode active material. Therefore, the first active material may also include an oxide of a layered structure, unlike an active material that includes only an oxide of a lithium-rich phase, such as Li₂M₁O₂ (wherein M₁ may be Ni, Co, Fe, Mn, Zn, Mg, Ca, Cu, or the like) and Li₂M₂O₃ (wherein M₂ may be Mn, Sn, Mo, Ru, Ir, or the like). Therefore, the first active material may have better stability of the crystal structure and long-term lifespan performance compared to the active material that includes only the oxide of the lithium-rich phase described above.

In some implementations, in chemical formula 1, 0≤x≤0.9, 0.05≤x≤0.9, 0.1≤x≤0.9, 0<x≤0.8, 0.05≤x≤0.8, or 0.1≤x≤0.8 may be satisfied.

In some implementations, in chemical formula 1, 0≤y≤0.9, 0.05≤y≤0.9, 0.1≤y≤0.9, 0<y≤0.8, 0.05≤y≤0.8, or 0.1≤y≤0.8 may be satisfied.

In some embodiments, in chemical formula 1, 1.1≤a/(x+y+z)≤1.95, 1.15≤a/(x+y+z)≤1.95, 1.2≤a/(x+y+z)≤1.95, or 1.3≤a/(x+y+z)≤1.95 may be satisfied.

In some embodiments, the mole fraction of manganese with respect to all elements excluding lithium and oxygen in the lithium-rich oxide particles may be from 0.5 to 0.75. For example, in chemical formula 1, 0.5≤z/(x+y+z)≤0.75 may be satisfied.

In some embodiments, 0.25≤(x+y)/(x+y+z)≤0.5 may be satisfied.

In some embodiments, the mole fraction of cobalt with respect to all elements excluding lithium and oxygen in the lithium-rich oxide particles may be from 0 to 0.02. For example, the lithium-rich oxide particles may not contain cobalt.

In some embodiments, in chemical formula 1, 1.9≤b≤2.1, or 1.95≤b≤2.05 may be satisfied.

The chemical structure represented by the chemical formula 1 represents a bonding relationship included in the structure of the first active material, and does not exclude other additional elements. For example, M includes Co, and Co may be provided as the main active element of the first active material together with Ni and Mn. The chemical formula 1 is provided to express the bonding relationship of the main active element, and should be understood as encompassing the introduction and substitution of additional elements.

In some embodiments, auxiliary elements may be further included in addition to the main active element to enhance the chemical stability of the first active material structure. The auxiliary elements may be incorporated together into the first active material to form a bond, and in this case, it should be understood that the auxiliary elements are also included within the chemical structure range represented by the chemical formula 1.

The auxiliary element may include at least one of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may also act as an auxiliary active element that contributes to the capacity/output activity of the first active material together with Co or Mn, such as Al.

In some implementations, the first active material may further include a coating material or a doping material containing a coating element or a doping element. For example, elements substantially the same as or similar to the auxiliary elements described above may be used as the coating element or the doping element. For example, the elements described above may be used alone or in combination of two or more as the coating element or the doping element. In this case, an upper limit of operating voltage of the lithium secondary battery may be controlled, thereby suppressing the voltage decay of the lithium secondary battery.

The coating element or doping element may be present on the particle surface of the first active material, or may penetrate through the particle surface of the first active material and be included in the bonding structure represented by the chemical formula 1.

In some embodiments, the coating material may form a coating layer having a sea-type shape or a coating layer having an island-type shape.

In some embodiments, the content of the coating element in the particles of the first active material may be 500 to 8,000 ppm, 1000 to 8,000 ppm, or 1500 to 8,000 ppm of the total weight of all elements excluding lithium and oxygen. When the content of the coating element is as described above, the initial capacity decrease and resistance increase of the lithium secondary battery may be prevented, and the voltage decay of the lithium secondary battery may be further suppressed.

In some embodiments, the coating material may be formed by a dry coating method or a wet coating method. For example, the particles of the first active material and the coating source may be dry mixed or wet mixed and heat treated (for example, sintered or dried) to form the coating material on the surface of the particles of the first active material. A coating source known in the art may be used as the coating source. For example, the coating source may contain B, Al, W, Zr, Ti, Mg, Co, or the like.

The particle composition of the first active material represented by the chemical formula 1 may be confirmed by inductively coupled plasma (ICP) analysis. For example, the particles of the first active material are analyzed by ICP, and the total number (for example, the a+x+y+z values in chemical formula 1) of metal atoms such as lithium is normalized to 1.8 to 2.2 (for example, 2), thereby obtaining the chemical formula of the first active material.

The second active material represented by the chemical formula 2 may be a lithium metal oxide particle having an olivine structure with excellent structural stability. In some embodiments, the second active material may be a lithium-iron-phosphate (LFP)-based active material containing iron (Fe), or a lithium-manganese-iron-phosphate (LMFP)-based active material in which some of the iron (Fe) in the LFP-based active material is replaced with manganese (Mn).

The particle composition of the second active material represented by the chemical formula 2 may also be confirmed by inductively coupled plasma (ICP) analysis. For example, the particles of the second active material may be analyzed by ICP, and the number of phosphorus atoms may be normalized to 1 to obtain chemical formula of the second active material.

In some embodiments, the second active material may include a carbon coating layer on the surface. When the second active material includes a carbon coating layer on the surface, the ionic and electronic conductivity of the second active material may be further improved.

The cathode active material 100 may have a core-shell structure in which a shell containing a second active material, which is a lithium metal oxide particle with an olivine structure having excellent structural stability, is disposed on the surface of a core 10 containing a first active material, which is a lithium-rich oxide particle with high discharge capacity. The cathode active material having the core-shell structure has a form in which the second active material evenly distributed on the surface of the first active material surrounds the first active material, and may have further improved thermal stability compared to the case in which the first active material and the second active material are simply blended.

In addition, since the first active material may be operated at a higher upper limit voltage than the NCM-based active material, a significant improvement in the cathode energy density is possible, and thus, when the first active material and the second active material are mixed in a core-shell structure, a high energy density that cannot be obtained by mixing the NCM-based active material and the LFP-based active material may be secured.

Accordingly, even when the battery is operated under high voltage/high temperature conditions, oxygen desorption or irreversible phase transformation on the surface of the first active material, which is a lithium-rich oxide particle, may be suppressed, and a high-capacity lithium secondary battery cathode with excellent life characteristics may be manufactured.

The weight % of the first active material based on the total weight of the cathode active material 100 may be greater than or equal to the weight % of the second active material. In some embodiments, the weight ratio of the first active material and the second active material based on the total weight of the cathode active material 100 may be 60:40 to 95:5. For example, the weight ratio of the first active material and the second active material based on the total weight of the cathode active material 100 may be 70:30 to 90:10.

When the content relationship of the first active material and the second active material is as described above, the cathode active material 100 may secure the life characteristics of the active material at an excellent level by including the second active material in a content of a certain level or more, and the cathode active material 100 may significantly increase the energy density by including a relatively large amount of the first active material.

In some embodiments, the BET specific surface area of the first active material may be 0.9 m²/g to 2.0 m²/g. For example, the BET specific surface area of the first active material may be 1.0 m²/g or more and 1.7 m²/g or less. If the BET specific surface area value of the first active material is less than 0.9 m²/g, the capacity of the cathode including the cathode active material may be reduced, and if it exceeds 2.0 m²/g, the lifespan performance of the cathode including the cathode active material may be reduced. The method for measuring the BET specific surface area is not particularly limited. For example, the nitrogen gas adsorption amount of the first active material under liquid nitrogen temperature (77K) conditions may be measured using a specific surface area analyzer (by Micromeritics, ASAP^{™} 2420) to calculate the specific surface area of the first active material.

In some embodiments, the average particle diameter D50 of the first active material may be greater than or equal to the average particle diameter D50 of the second active material. When the first active material included in the cathode active material 100 is applied as a large particle and the second active material is applied as a small particle, the energy density of the cathode active material 100 may be further improved due to the bimodal effect.

In some embodiments, the average particle diameter D50 of the first active material may be 5 µm to 12 µm. For example, the average particle diameter D50 of the first active material may be 6 µm or more and 11 µm or less.

In some implementations, the average particle diameter D50 of the second active material may be 0.3 µm to 5 µm. For example, the average particle diameter D50 of the second active material may be 0.5 µm or more and 2 µm or less.

### Cathode for Lithium Secondary Battery

A cathode for a lithium secondary battery according to an implementation includes a cathode active material 100 according to any one of the above-described implementations. For example, the cathode for a lithium secondary battery may include a cathode current collector; and a cathode mixture layer on at least one surface of the cathode current collector.

The components of the cathode current collector are not particularly limited. For example, the cathode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some embodiments, the cathode current collector may be aluminum foil (Al-foil).

The thickness of the cathode current collector is not particularly limited. For example, the thickness of the cathode current collector may be 0.1 to 50 um.

The cathode mixture layer may further include a binder. The binder is not particularly limited. For example, the binder may include one type or two or more types among styrene butadiene rubber (SBR), polytetrafluoroethylene, polyvinylidene fluoride, vinylidene fluoride/hexafluoropropylene copolymer, polyacrylonitrile, and polymethyl methacrylate.

The cathode mixture layer may further include a conductive material. The conductive material is not particularly limited. For example, the conductive material may include one type or two or more types of graphite such as natural graphite or artificial graphite; a carbon-based material such as carbon black, acetylene black, Ketjen black, channel black, furnace black, lamp black, thermal black, carbon fiber, and carbon nanotubes (CNT); metal powder or metal fibers such as copper, nickel, aluminum, and silver; conductive whisker such as zinc oxide and potassium titanate; a conductive metal oxide such as titanium oxide; or a conductive polymer such as polyphenylene derivatives.

### Method of Manufacturing Cathode for Lithium Secondary Battery

A method of manufacturing a cathode for a lithium secondary battery according to an embodiment includes an operation of manufacturing a cathode slurry including a first active material which is a lithium-rich oxide and a second active material having an olivine structure; and an operation of forming a cathode mixture layer on at least one surface of a cathode current collector with the cathode slurry. The cathode mixture layer includes a cathode active material 100 according to any one of the above-described embodiments.

In some embodiments, the first active material may be represented by chemical formula 1.

[Chemical formula 1] Liₐ[MₓNi_{y}Mn_{z}]O_{b}

In chemical formula 1, M is at least one element selected from the group consisting of Co, Mg, Ti, Al, Fe, Ru, Zr, W, Sn, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

In some embodiments, the second active material may be represented by chemical formula 2.

[Chemical Formula 2] LiMePO₄

In chemical formula 2, Me is at least one element selected from the group consisting of Co, Ni, Fe, and Mn.

A detailed description of the first active material, the second active material, and the like overlaps with the above-described content and is omitted.

### <Manufacturing of Cathode Slurry>

In some embodiments, the cathode slurry may be manufactured by adding the first active material to a pre-dispersed solution of the second active material. The pre-dispersed solution of the second active material may be a slurry-type solution in which the second active material is pre-dispersed in a solvent. The solvent is not particularly limited. For example, the solvent may be N-methyl-2-pyrrolidone (NMP).

When the first active material is added to the pre-dispersed solution separately prepared by pre-dispersing the second active material, agglomeration between the second active material particles may be prevented, and the second active material may be uniformly distributed on the surface of the first active material to form an excellent core-shell structure of the cathode active material 100.

In some embodiments, the solid content of the pre-dispersed solution may be 50 wt% to 70 wt%. For example, the solid content of the pre-dispersed solution may be 60 wt% to 65 wt%. When the solid content of the pre-dispersed solution is within the above-described range, the dispersibility and flowability of the final prepared cathode slurry may be excellent.

In some embodiments, the content of the first active material added to the pre-dispersed solution of the second active material may be adjusted in consideration of the contents of the first active material and the second active material in the finally manufactured cathode active material 100.

In some embodiments, the cathode slurry may further include components such as a binder and a conductive agent. The binder and/or the conductive agent may be added by being divided in two portions according to the weight ratio of the first active material and the second active material when manufacturing the pre-dispersed solution and slurry. In some embodiments, the binder and/or the conductive agent may be added in the form of a separate pre-dispersed solution. A detailed description of the binder and the conductive agent overlaps with the above-described content, so description is omitted.

### <Formation of Cathode Mixture Layer>

In some embodiments, the cathode mixture layer may be formed by drying the cathode slurry applied to at least one surface of the cathode current collector. The method of applying the cathode slurry is not particularly limited. For example, the cathode slurry may be applied using a method such as bar coating, casting, or spraying.

In some embodiments, the drying of the cathode slurry may be performed at 100°C to 200°C. For example, the drying of the cathode slurry may be performed at 130°C to 170°C.

### Lithium Secondary Battery

A lithium secondary battery according to an embodiment includes a cathode for a lithium secondary battery according to any one of the above-described embodiments. For example, the lithium secondary battery may include a unit cell including the cathode for a lithium secondary battery as described above, an anode, and a separator. The separator may be disposed between the cathode and the anode as described above in the unit cell.

The anode is not particularly limited. For example, the anode may include an anode current collector; and an anode mixture layer on at least one surface of the anode current collector.

The components of the anode current collector are not particularly limited. For example, the anode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some embodiments, the anode current collector may be copper foil (Cu-foil).

The thickness of the anode current collector is not particularly limited. For example, the thickness of the anode current collector may be 0.1 to 50 um.

The anode mixture layer may include an anode active material. The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials and tin-containing materials.

The crystalline carbon may be graphite-based carbon, for example, such as natural graphite, artificial graphite, graphitized coke, graphitized mesocarbon microbeads (MCMB), and graphitized mesophase pitch-based carbon fibers (MPCF).

The amorphous carbon may be, for example, hard carbon, soft carbon, coke, mesocarbon microbeads (MCMB), or mesophase pitch-based carbon fibers (MPCF).

The elements included in the lithium alloy may be, for example, aluminum, zinc, bismuth, cadmium, antimony, silicon, lead, tin, gallium, or indium.

The silicon-containing material is not particularly limited as long as it contains silicon, and may be an active material capable of alloying with lithium (Li). For example, the silicon-containing material may be at least one selected from the group consisting of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), and silicon alloy.

The anode mixture layer may further include a binder. The binder is not particularly limited. For example, the binder may be any one of a rubber-based binder such as styrenebutadiene rubber (SBR), fluorine-based rubber, ethylene propylene rubber, butadiene rubber, isoprene rubber, and silane-based rubber; a cellulose-based binder such as carboxymethyl cellulose (CMC), hydroxypropyl methyl cellulose, methyl cellulose, or an alkali metal salt thereof; and combinations thereof.

The anode mixture layer may further include a conductive material. The conductive material is not particularly limited. For example, the conductive material may be at least one selected from a particulate carbon material and a fibrous carbon material. The particulate carbon material may be carbon black such as Super-P or Super-C, acetylene black, Ketjen black, or the like, and the fibrous carbon material may be carbon fiber, carbon nanotube (CNT), vapor-grown carbon fiber (VGCF), or the like.

The separator is not particularly limited. For example, the separator may include a porous polymer film manufactured from a polyolefin polymer such as an ethylene homopolymer, a propylene homopolymer, an ethylene/butene copolymer, an ethylene/hexene copolymer, an ethylene/methacrylate copolymer, or the like. In addition, the separator may include a nonwoven fabric formed of a high-melting-point glass fiber, a polyethylene terephthalate fiber, or the like.

In some embodiments, the lithium secondary battery may be manufactured by housing the unit cell in a pouch, which is a battery case, and then injecting an electrolyte.

The electrolyte may include an organic solvent and a lithium salt. The organic solvent acts as a medium through which ions involved in the electrochemical reaction of the battery may move, and for example, carbonate-based, ester-based, ether-based, ketone-based, alcohol-based, or aprotic solvents may be used alone or in combination of two or more, and the mixing ratio in the case of using two or more types in combination may be appropriately adjusted according to the desired battery performance.

The lithium salt is dissolved in the organic solvent and acts as a source of lithium ions in the battery, and is a substance that enables the basic operation of a lithium secondary battery and promotes the movement of lithium ions between the cathode and the anode. A known substance may be used as the lithium salt at a concentration appropriate for the use. The electrolyte may further include a known solvent and a known additive to improve charge/discharge characteristics, flame retardancy characteristics, and the like, as needed.

In some embodiments, the unit cell may not include a separator between the cathode and the anode, and may include a solid electrolyte. The solid electrolyte is not particularly limited, and may be, for example, an oxide-based solid electrolyte, a sulfide-based solid electrolyte, or a polymer-based solid electrolyte.

### Example

### 1. Preparation of a cathode for a lithium secondary battery

### 1) Examples 1 and 2

### 1) Preparation of first active material

Distilled water from which dissolved oxygen was removed was introduced into a sealed reactor, and NiSO₄·6H₂O and MnSO₄·H₂O were additionally introduced at a molar ratio of 36.5:63.5. Thereafter, a precipitating agent (NaOH) and a chelating agent (NH₄OH) were additionally introduced into the reactor, and a coprecipitation reaction was performed for 72 hours to prepare metal hydroxide particles.

The metal hydroxide particles were dried at 100°C for 12 hours, and then re-dried at 120°C for 12 hours. The dried metal hydroxide particles were introduced into a dry mixer together with lithium carbonate to prepare a mixture. The mixing ratio of the metal hydroxide particles and lithium carbonate was adjusted so that the first active material in the form of lithium metal oxide particles finally manufactured satisfies the composition according to the following ICP analysis.

The mixture was loaded into a sintering furnace, and the temperature of the sintering furnace was increased to 250°C at a rate of 2°C/min, and the first sintering was performed while being maintained at 250°C for 4 hours. After the first sintering, the temperature of the sintering furnace was increased to 900°C at a rate of 2°C/min, and the second sintering was performed while being maintained at 900°C for 9 hours.

After the sintering was completed, the sintered product was naturally cooled to room temperature, and pulverized and classified to manufacture lithium-rich oxide particles as the first active material. As a result of analyzing the lithium-rich oxide particles using inductively coupled plasma (ICP) (normalizing the number of oxygen atoms to 2), it was confirmed that the chemical formula of the lithium-rich oxide particles is Li_{1.13}Ni_{0.32}Mn_{0.55}O₂, corresponding to a lithium-manganese-rich (LMR) active material, which is a compound represented by chemical formula 1.

[Chemical Formula 1] Liₐ[MxNi_{y}Mn_{z}]O_{b}

In chemical formula 1, M is at least one element selected from the group consisting of Co, Mg, Ti, Al, Fe, Ru, Zr, W, Sn, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

Meanwhile, the specific surface area was measured by performing Brunauer-Emmett-Teller(BET) analysis on the first active material. In detail, the nitrogen gas adsorption amount of the first active material was measured under liquid nitrogen temperature (77K) conditions using a specific surface area analyzer (ASAP^{™} 2420 by Micromeritics) to calculate the specific surface area, and the BET specific surface area of the first active material was 1.63 m²/g (Example 1) and 0.91 m²/g (Example 2).

In addition, the average particle diameter D50 of the first active material was analyzed using a laser diffraction method (MT 3000 by Microtrac), and the average particle diameter D50 of the first active material was confirmed to be 10.1 µm (Example 1) and 6.8 µm (Example 2).

### (2) Manufacturing of Second Active Material

Lithium carbonate (Li₂CO₃) as a lithium source, iron phosphate (FePO₄) as a metal phosphate, polyethylene as a first carbon source, and glucose as a second carbon source were added to distilled water, and the particles were mixed and pulverized through a ball mill to form a mixed solution containing LiFePO₄. The formed mixed solution containing LiFePO₄ was dried using a spray dryer with a micro-nozzle shape.

The dried powder was calcined at about 600°C to 750°C for 5 to 12 hours under a nitrogen atmosphere, and then a classification and de-ironization process was performed to manufacture a composite particle-type LFP active material in which a carbon coating layer was formed on lithium metal phosphate particles represented by the chemical formula of LiFePO₄, as a second active material. As a result of analyzing the average particle diameter D50 of the second active material in the same manner as the first active material, the average particle diameter D50 of the second active material was confirmed to be 0.7 µm.

### (3) Cathode Production

The second active material was mixed with a solvent, N-methyl-2-pyrrolidone (NMP), to produce a pre-dispersed solution having a solid content of 62 wt%, and the first active material was added to the pre-dispersed solution to produce a slurry having a solid content of 66 wt%. At this time, the first active material was added so that the weight ratio of the first active material and the second active material was 80:20. In addition, when producing the pre-dispersed solution and slurry, a predetermined amount of a conductive agent (carbon black) and a binder (polyvinylidene fluoride; PVDF) were added and mixed twice according to the weight ratio of the first active material and the second active material, respectively, to produce a cathode slurry.

The cathode slurry was applied at 12 mg/cm² on one side of a cathode current collector (Al-foil) having a thickness of 15 µm, and dried at 150°C to form a cathode mixture layer. Thereafter, the cathode current collector and the cathode mixture layer were rolled at a density of 2.7 g/cc to manufacture a cathode including a core-shell structured cathode active material in which a shell containing a second active material was coated on the surface of the core containing the first active material. At this time, based on the solid content, the contents of the cathode active material, binder, and conductive material included in the cathode mixture layer were 92 wt%, 3 wt%, and 5 wt%, respectively.

Meanwhile, the Scanning Electron Microscopy (SEM) and Energy Dispersive Spectroscopy (EDS) analysis images of the cross-section of the cathode active material according to Example 1 are as illustrated in FIGS. 2A and 2B. At this time, elemental mapping was performed for nickel (Ni) and iron (Fe) using EDS, and the bright part of FIG. 2A corresponds to the first active material (LMR), and the bright part of FIG. 2B corresponds to the second active material (LFP). Referring to FIGS. 2A and 2B, it can be confirmed that a core-shell structure is excellently formed in which the second active material is evenly distributed on the surface of the first active material and surrounds the first active material.

### 2) Example 3

Except that the cathode slurry was prepared without pre-dispersing the second active material, a cathode of Example 3 was prepared using the same method as Example 1.

### 3) Example 4

Except that the average particle diameter D50 of the first active material was 3.8 µm and the average particle diameter D50 of the second active material was 7.7 µm, a cathode of Example 4 was prepared using the same method as Example 1.

### 4) Example 5

Except that the weight ratio of the first active material and the second active material was 60:40, a cathode of Example 5 was manufactured using the same method as Example 1.

Meanwhile, the Scanning Electron Microscopy (SEM) and Energy Dispersive Spectroscopy (EDS) analysis images of the cross-section of the cathode active material according to Example 5 are as illustrated in FIGS. 3A and 3B. At this time, elemental mapping was performed on nickel (Ni) and iron (Fe) using EDS, and the bright part of FIG. 3A corresponds to the first active material (LMR), and the bright part of FIG. 3B corresponds to the second active material (LFP). Referring to FIGS. 3A and 3B, it can be confirmed that a core-shell structure is excellently formed in which the second active material is evenly distributed on the surface of the first active material and surrounds the first active material.

### 5) Comparative Example 1

The first active material was applied as the cathode active material of Comparative Example 1.

### 6) Comparative Example 2

The cathode of Comparative Example 2 was manufactured using the same method as Example 1, except that the cathode slurry was manufactured so that the weight ratio of the first active material and the second active material was 20:80.

### 2. Performance Evaluation (DSC Analysis)

The thermal stability of the cathode for a lithium secondary battery manufactured as described above was evaluated by performing differential scanning calorimetry (DSC) analysis. In detail, the calorific value of the charging cathode was evaluated using a differential scanning calorimeter (Model Name: DSC 1 STAR System by Mettler Toledo), and the results are illustrated in Table 1 below along with the discharge capacity of the cathode active material. At this time, the charging cathode was prepared using the following method.

First, a coin half-cell was manufactured that included the cathodes of the examples and comparative examples and had lithium metal as the counter electrode. The coin half-cell was charged to 4.6 V with a current of 0.1 C, discharged to 2.0 V, and then charged again to 4.6 V. Then, the cell was disassembled, and the obtained charged cathode was washed and dried to prepare a sample for DSC analysis.

**[Table 1]**

| Distinction | First active material : Second active material Weight ratio | Comparison of particle diameters (D50) of first active material and second active material | Predispersion | Performance Evaluation (DSC analysis) | |
|---|---|---|---|---|---|
| | | | | Calorific Value (J/g) | Discharge Capacity (mAh/g) |
| Example 1 | 80 : 20 | First active material (10.1µm) > Second active material(0.7 µm) | O | 1074 | 219.3 |
| Example 2 | 80 : 20 | First active material (6.8µm) > Second active material(0.7 µm) | O | 915 | 223.8 |
| Example 3 | 80 : 20 | First active material (10.1µm) > Second active material(0.7 µm) | X | 1415 | 219.4 |
| Example 4 | 80 : 20 | First active material (3.8µm) < Second active material(7.7 µm) | O | 1564 | 218.7 |
| Example 5 | 60 : 40 | First active material (10.1µm) > Second active material(0.7 µm) | O | 877 | 204.5 |
| Comparative Example 1 | 100 : 0 | - | X | 2135 | 234.1 |
| Comparative Example 2 | 20 : 80 | First active material (10.1µm) > Second active material(0.7 µm) | O | 630 | 174.8 |

Referring to Table 1 above, the cathode of Comparative Example 1 contained only the first active material (LMR) without mixing the second active material (LFP) with excellent thermal stability, and thus showed the highest DSC calorific value. Therefore, it is determined that the cathode of Comparative Example 1 has relatively low thermal stability.

In addition, the cathode of Comparative Example 2 contained a relatively large amount of the second active material (LFP) with excellent thermal stability, and thus showed the lowest DSC calorific value, but the content of the first active material (LMR) was relatively low, and thus the discharge capacity was 20% lower than the discharge capacity of Examples 1 to 4.

On the other hand, the cathodes of Examples 1 to 5, which contained the first and second active materials simultaneously and adjusted the content of the first active material to be higher than that of the second active material, showed relatively low calorific value compared to the cathode of Comparative Example 1, but high discharge capacity compared to the cathode of Comparative Example 2.

Thereamong, the cathode of Example 3, in which the cathode slurry was prepared without pre-dispersing the second active material (LFP), showed a relatively high DSC calorific value. This is because, if the second active material is not pre-dispersed, agglomeration occurs between the particles of the second active material, which reduces the effect of the second active material (LFP) wrapping the first active material (LMR), and thus, the core-shell structure of the cathode active material is not formed relatively well compared to Examples 1 and 2.

In addition, the cathode of Example 4, in which the particle size of the second active material (LFP) was applied larger than that of the first active material (LMR), also showed a relatively high DSC calorific value. This is because, if the particle size of the first active material (LMR) corresponding to the core is smaller than that of the second active material (LFP), the core-shell structure in which the second active material (LFP) wraps the first active material (LMR) is not formed relatively well.

Meanwhile, the cathode of Example 5, in which the weight ratio of the first active material (LMR) and the second active material (LFP) was applied as 60:40, contained a relatively larger amount of the second active material with excellent thermal stability, and thus the DSC calorific value was about 18% lower than that of Example 1, but the discharge capacity was about 7% lower than that of Example 1.

Therefore, it is determined that when the first active material is added to the pre-dispersed solution of the second active material as in Examples 1 and 2 and the particle size of the first active material is greatly adjusted compared to that of the second active material, a high-capacity cathode with further improved thermal stability may be manufactured by including a cathode active material with an excellent core-shell structure.

The present disclosure may also relate to the following numbered aspects:
Aspect 1) A cathode active material may include a core containing a first active material, a lithium-rich oxide; and a shell disposed on a surface of the core and containing a second active material having an olivine structure. Weight % of the first active material may be greater than or equal to weight % of the second active material based on a total weight of the cathode active material.
Aspect 2) In Aspect 1, the first active material may be represented by chemical formula 1: Liₐ[MₓNi_{y}Mn_{z}]O_{b}, where M is at least one element selected from the group consisting of Co, Mg, Ti, Al, Fe, Ru, Zr, W, Sn, Nb, Mo, Cu, Zn, Cr, Ga, V and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.
Aspect 3) In Aspect 1 or 2, the second active material may be represented by chemical formula 2: LiMePO₄, where Me is at least one element selected from the group consisting of Co, Ni, Fe, and Mn.
Aspect 4) In anyone of Aspects 1 to 3, a weight ratio of the first active material and the second active material based on the total weight of the cathode active material may be 60:40 to 95:5.
Aspect 5) In anyone of Aspects 1 to 4, a BET specific surface area of the first active material may be 0.9 m²/g to 2.0 m²/g.
Aspect 6) In anyone of Aspects 1 to 5, an average particle diameter D50 of the first active material may be equal to or greater than an average particle diameter D50 of the second active material.
Aspect 7) In Aspect 6, the average particle diameter D50 of the first active material may be 5 µm to 12 µm.
Aspect 8) In Aspect 6 or 7, the average particle diameter D50 of the second active material may be 0.3 µm to 5 µm.
Aspect 9) A cathode for a lithium secondary battery may include a cathode active material of anyone of Aspects 1 to 8.
Aspect 10) A method of manufacturing a cathode for a lithium secondary battery may include: manufacturing a cathode slurry including a first active material which is a lithium-rich oxide and a second active material having an olivine structure; and forming a cathode mixture layer on at least one surface of a cathode current collector with the cathode slurry. The cathode mixture layer may include the cathode active material of anyone of Aspects 1 to 8.
Aspect 11) In Aspect 10, the first active material may be represented by the chemical formula 1.
Aspect 12) In Aspect 10 or 11, the second active material may be represented by the chemical formula 2.
Aspect 13) In anyone of Aspects 10 to 12, the cathode slurry may be manufactured by adding the first active material to a pre-dispersed solution of the second active material.
Aspect 14) In Aspect 13, a solid content of the pre-dispersed solution may be 50 wt% to 70 wt%.
Aspect 15) A lithium secondary battery may include the cathode for a lithium secondary battery of Aspect 9.

As set forth above, according to an embodiment, a cathode for a lithium secondary battery having excellent lifespan performance may be provided.

According to an embodiment, the thermal stability of a cathode for a secondary battery may be improved.

According to an embodiment, a cathode for a lithium secondary battery having excellent energy density may be provided.

Only specific examples of implementations of certain embodiments are described. Variations, improvements and enhancements of the disclosed embodiments and other embodiments may be made based on the disclosure of this patent document.

## Claims

1. A cathode active material comprising:
a core containing a first active material, a lithium-rich oxide; and
a shell disposed on a surface of the core and containing a second active material having an olivine structure,
wherein weight % of the first active material is greater than or equal to weight % of the second active material based on a total weight of the cathode active material.

2. The cathode active material of claim 1, wherein the first active material is represented by chemical formula 1: Liₐ[MₓNi_{y}Mn_{z}]O_{b}, where M is at least one element selected from the group consisting of Co, Mg, Ti, Al, Fe, Ru, Zr, W, Sn, Nb, Mo, Cu, Zn, Cr, Ga, V and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

3. The cathode active material of claim 1 or 2, wherein the second active material is represented by chemical formula 2: LiMePO₄, where Me is at least one element selected from the group consisting of Co, Ni, Fe, and Mn.

4. The cathode active material of anyone of claims 1 to 3, wherein a weight ratio of the first active material and the second active material based on the total weight of the cathode active material is 60:40 to 95:5.

5. The cathode active material of anyone of claims 1 to 4, wherein a BET specific surface area of the first active material is 0.9 m²/g to 2.0 m²/g.

6. The cathode active material of anyone of claims 1 to 5, wherein an average particle diameter D50 of the first active material is equal to or greater than an average particle diameter D50 of the second active material.

7. The cathode active material of claim 6, wherein the average particle diameter D50 of the first active material is 5 µm to 12 µm.

8. The cathode active material of claim 6 or 7, wherein the average particle diameter D50 of the second active material is 0.3 µm to 5 µm.

9. A cathode for a lithium secondary battery, comprising the cathode active material of anyone of claims 1 to 8.

10. A method of manufacturing a cathode for a lithium secondary battery, comprising:
manufacturing a cathode slurry including a first active material which is a lithium-rich oxide and a second active material having an olivine structure; and
forming a cathode mixture layer on at least one surface of a cathode current collector with the cathode slurry,
wherein the cathode mixture layer includes the cathode active material of anyone of claims 1 to 8.

11. The method of claim 10, wherein the first active material is represented by chemical formula 1: Liₐ[MₓNi_{y}Mn_{z}]O_{b}, where M is at least one element selected from the group consisting of Co, Mg, Ti, Al, Fe, Ru, Zr, W, Sn, Nb, Mo, Cu, Zn, Cr, Ga, V and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

12. The method of claim 10 or 11, wherein the second active material is represented by chemical formula 2: LiMePO₄, where Me is at least one element selected from the group consisting of Co, Ni, Fe, and Mn.

13. The method of anyone of claims 10 to 12, wherein the cathode slurry is manufactured by adding the first active material to a pre-dispersed solution of the second active material.

14. The method of claim 13, wherein a solid content of the pre-dispersed solution is 50 wt% to 70 wt%.

15. A lithium secondary battery comprising the cathode for a lithium secondary battery according to claim 9.
